Europäisches Patentamt

European Patent Office

Office européen des brevets

(11) Numéro de publication: **0 262 032 B1**

# (12) FASCICULE DE BREVET EUROPEEN

(45) Date de publication de fascicule du brevet:
27.11.91

(51) Int. Cl.⁵: **G06F 7/50, G06F 7/52**

(21) Numéro de dépôt: **87402069.6**

(22) Date de dépôt: **16.09.87**

(54) **Additionneur binaire comportant un opérande fixé, et multiplieur binaire parallèle-série comprenant un tel additionneur.**

(30) Priorité: **22.09.86 FR 8613222**

(43) Date de publication de la demande:
**30.03.88 Bulletin 88/13**

(45) Mention de la délivrance du brevet:
**27.11.91 Bulletin 91/48**

(84) Etats contractants désignés:
**DE GB IT NL**

(56) Documents cités:
**GB-A- 861 515**

**IBM TECHNICAL DISCLOSURE BULLETIN, vol. 27, no. 11, avril 1985, pages 6450-6453, New York, US; "Parallel-array incrementing network"**

**IEEE JOURNAL OF SOLID-STATE CIRCUITS, vol. SC-20, no. 2, avril 1985, pages 542-547, IEEE, New York, US; D.A. HENLIN et al.: "A 16 bit X 16 bit pipelined multiplier macrocell"**

(73) Titulaire: **Jutand, Francis**
**167, rue Etienne Dolet**
**F-94230 Cachan(FR)**

Titulaire: **Demassieux, Nicolas**
**4, Impasse Reille**
**F-75014 Paris(FR)**

Titulaire: **Dana, Michel**
**53, rue de la Colonie**
**F-75013 Paris(FR)**

(72) Inventeur: **Jutand, Francis**
**167, rue Etienne Dolet**
**F-94230 Cachan(FR)**
Inventeur: **Demassieux, Nicolas**
**4, Impasse Reille**
**F-75014 Paris(FR)**
Inventeur: **Dana, Michel**
**53, rue de la Colonie**
**F-75013 Paris(FR)**

(74) Mandataire: **Mongrédien, André et al**
**c/o BREVATOME 25, rue de Ponthieu**
**F-75008 Paris(FR)**

## Description

La présente invention a pour objet un additionneur binaire pour calculer la somme de deux opérandes, parmi lesquels l'un des opérandes a une valeur fixe et connue.

L'invention a également pour objet un multiplieur binaire parallèle-série pour calculer le produit entre un opérande série, de valeur binaire quelconque, et un opérande parallèle, de valeur binaire fixe et connue.

Les additionneurs et les multiplieurs sont des opérateurs employés dans la majorité des systèmes de traitement de l'information, depuis les microprocesseurs jusqu'aux ordinateurs complets. Les multiplieurs sont souvent les opérateurs critiques d'un système de traitement de l'information, tant du point de vue de leur vitesse que du point de vue du coût matériel de leur réalisation.

Il arrive que l'un des opérandes soit non seulement fixe, mais également connu, au moment de la réalisation de l'opérateur. Ceci est particulièrement fréquent dans le domaine des circuits intégrés spécialisés conçus spécifiquement pour mettre en oeuvre un algorithme particulier. On peut citer notamment les algorithmes de traitement de signal.

Par exemple, dans le domaine de la transmission de signaux d'image, le signal d'image subit un traitement de compression et de codage avant sa transmission.

Ce traitement inclut notamment une transformation linéaire, telle qu'une transformée en cosinus discrète. Une telle transformation est représentée classiquement par un graphe dans lequel les branches représentent une opération de multiplication et les noeuds une opération d'addition ou de soustraction.

De tels graphes sont décrits dans les documents suivants :
- "A fast computational algorithm for the discrete cosine transform" de W.H. CHEN et al, IEEE Transactions on Communication, vol COM-25, n°9, sept.1977, pages 1004 à 1009,
- "A high FDCT processor for real-time processing of NTSC color TV signal" de A. JALALI et al, IEEE Transactions on Electromagnetic Compatibility, vol. EMC-24, n°2, mai 1982, pages 278 à 286,
- brevet US-4 385 363.

Dans une telle transformation linéaire, chaque opération de multiplication porte sur un opérande inconnu, dont la valeur binaire est quelconque, et un opérande fixe, dont la valeur binaire est connue.

Dans les circuits selon l'art connu, le fait que l'un des opérandes soit fixe et connu n'est pas pris en compte. Bien que l'un des opérandes soit fixe, parmi les deux opérandes à additionner ou à multiplier, on utilise généralement un additionneur ou un multiplieur complet, permettant de traiter deux opérandes de valeur quelconque.

Ceci n'est pas satisfaisant. On conçoit en effet que des avantages pourraient être obtenus si l'on tenait compte du fait qu'un des deux opérandes est fixe. Ces avantages pourraient consister en une plus grande vitesse de calcul de l'opérateur ou en une diminution de la surface occupée par l'opérateur sur un circuit intégré.

Il serait bien sûr envisageable de forcer l'une des entrées de l'opérateur à la valeur de l'opérande fixe en reliant les différents bits à des potentiels adéquats. Mais les gains en vitesse et en surface seraient très faibles.

Une solution connue tenant compte du fait que l'un des deux opérandes est fixe est le recours au stockage dans une mémoire morte des résultats précalculés de l'opération entre cette opérande fixe et toutes les valeurs possibles de l'opérande variable. L'opération se résume alors à une lecture en mémoire morte, l'opérande variable servant d'index pour adresser cette mémoire.

Cette méthode peut présenter un intérêt pour certaines applications. Cependant, ces applications sont limitées car la taille de la mémoire morte et le temps d'accès à cette mémoire morte augmentent très rapidement avec la taille des opérandes.

La taille très importante de la mémoire morte empêche en particulier d'utiliser une telle méthode pour la réalisation d'additionneurs ou de multiplieurs sous forme de circuits intégrés, car le coût en surface est trop important.

On pourra se reporter à l'état de la technique constitué par le document IBM Technical Disclosure Bulletin, vol. 27, n° 11, Avril 1985, pages 6450 à 6453, qui décrit un circuit d'incrémentation de type parallèle dans lequel les cellules d'addition reçoivent chacune 2 bits quelconques. On pourra également se reporter à l'état de la technique constitué par le document GB-A-861 515.

Les opérateurs d'addition ou de multiplication selon l'art antérieur sont donc peu rapides et coûteux en surface, dans le cas d'une réalisation intégrée, qu'ils se présentent sous la forme d'un multiplieur standard pouvant multiplier deux opérandes variables ou sous la forme d'une table contenue dans une mémoire morte.

L'invention a notamment pour but de réduire le coût en surface des opérateurs d'addition et de multiplication, dans le cas où l'un des deux opérandes est fixe et connu.

EP 0 262 032 B1

L'invention a pour objet un additionneur binaire tel que revendiqué en revendication 1.

L'invention a également pour objet un additionneur binaire pour additionner un premier opérande de valeur binaire quelconque à un second opérande de valeur binaire fixe et connue, dont la structure et les connexions sont définies selon ladite valeur binaire prédéterminée du second opérande.

De manière précise, l'invention a pour objet un additionneur binaire pour additionner un premier opérande A de n bits $A_{n-1}$,..., $A_0$, de valeur binaire quelconque, à un second opérande B de n bits $B_{n-1}$, ..., $B_0$, de valeur binaire prédéterminée, ledit additionneur comprenant n cellules d'addition $CA_{n-1}$, ..., $CA_0$, chaque cellule étant munie d'une entrée de donnée pour recevoir un bit $A_i$, $0 \leq i \leq n-1$, du premier opérande, une entrée de retenue pour recevoir un bit de retenue $C_i$, une sortie de donnée $S_i$ et une sortie de retenue pour délivrer un bit de retenue $C_{i+1}$, la sortie de retenue de la cellule d'addition de rang j, $0 \leq j \leq n-2$, étant reliée à l'entrée de retenue de la cellule d'addition de rang j + 1, ledit additionneur étant caractérisé en ce que chaque cellule d'addition $CA_i$ , $0 \leq i \leq n-1$, est câblée selon la valeur du bit $B_i$ de l'opérande B et en ce qu'il comprend deux types de cellules d'addition qui sont d'une part des cellules d'addition conçues pour recevoir un bit de retenue non-complémenté et pour délivrer un bit de retenue complémenté, et des cellules d'addition conçues pour recevoir un bit de retenue complémenté et pour délivrer un bit de retenue non-complémenté, les cellules d'addition consécutives de l'additionneur étant alternativement du premier et du second types.

L'invention a pour second objet un multiplieur binaire tel que revendiqué en revendication 3, utilisant un additionneur tel que revendiqué.

L'invention a également pour objet un multiplieur binaire parallèle-série pour la multiplication de deux opérandes binaires dont l'un a une valeur fixe et connue.

Ce multiplieur binaire comprend un additionneur selon l'invention, câblé selon la valeur de l'opérande fixe, ledit additionneur ayant une entrée et une sortie; un multiplexeur ayant deux entrées et une sortie, la première entrée étant reliée à la sortie de l'additionneur, ledit multiplexeur comportant également une entrée de commande sur laquelle est appliqué l'opérande non fixe sous forme série ; et un registre d'accumulation-décalage ayant une entrée et une sortie, l'entrée dudit registre étant reliée à la sortie du multiplexeur et la sortie dudit registre étant reliée à l'entrée de l'additionneur et à la seconde entrée du multiplexeur.

Selon une variante de réalisation, pour permettre la multiplication de deux opérandes de signe contraire, le multiplieur comprend un deuxième multiplexeur disposé entre la sortie du registre d'accumulation-décalage et l'entrée de l'additionneur, ledit second multiplexeur comprenant deux entrées, reliée respectivement à ta sortie du registre d'accumulation et de décalage et à la sortie d'un inverseur dont l'entrée est reliée à la sortie du registre d'accumulation et de décalage, et un troisième multiplexeur pour commander l'état du bit de retenue appliqué à l'additionneur, les deuxième et troisième multiplexeurs étant commandés par le bit de poids le plus fort $D_{n-1}$ de l'opérande non fixe D.

Selon un mode de réalisation avantageux, le multiplieur pouvant traiter deux opérandes de signe contraire comprend en outre un décodeur de Booth pour traiter simultanément plusieurs bits de l'opérande en série, ledit décodeur comprenant un moyen de stockage d'un bit d'état pour mémoriser la polarité du contenu du registre d'accumulation-décalage.

Les caractéristiques et avantages de l'invention ressortiront mieux de la description qui va suivre donnée à titre illustratif mais non limitatif, en référence aux dessins annexés, sur lesquels :
- la figure 1 représente une cellule d'addition selon l'art antérieur, pour additionner deux bits $A_i$ et $B_i$ de valeur quelconque,
- la figure 2 est une schématisation de la cellule d'addition de la figure 1, sous la forme de portes logiques,
- la figure 3 illustre la structure d'un additionneur binaire selon l'art antérieur, pour multiplier deux opérandes de valeur binaire quelconque,
- les figures 4a et 4b représentent des cellules d'addition pour un additionneur selon l'invention pour additionner un bit $A_i$ de valeur binaire quelconque respectivement à un bit de valeur logique "0" et à un bit de valeur logique "1",
- les figures 5a et 5b illustrent schématiquement les cellules d'addition des figures 4a et 4b sous la forme de portes logiques,
- la figure 6 représente schématiquement un additionneur selon l'invention, dans lequel les cellules d'addition sont câblées suivant la valeur des bits de l'opérande fixe,
- les figures 7a et 7b représentent schématiquement des cellules d'addition conformes à l'invention correspondant respectivement à un bit fixe de valeur logique "0" et à un bit fixe de valeur logique "1", ces cellules d'addition étant conçues pour recevoir un bit de retenue non-complémenté et pour délivrer un bit de retenue complémenté,

3

- les figures 8a et 8b représentent schématiquement des cellules d'addition conformes à l'invention correspondant respectivement à un bit fixe de valeur logique "0" et à un bit fixe de valeur logique "1", ces cellules d'addition étant conçues pour recevoir à un bit de retenue complémenté et pour délivrer un bit de retenue non-complémenté,
- la figure 9 illustre schématiquement la structure d'un multiplieur selon l'invention, ledit multiplieur comprenant un additionneur conforme à la figure 6,
- la figure 10 illustre une variante de réalisation du multiplieur de l'invention, pour le traitement de deux opérandes de signes quelconques,
- la figure 11 illustre une variante de réalisation du multiplieur de la figure 10, comprenant un registre de sortie parallèle,
- la figure 12 illustre une variante de réalisation du multiplexeur de la figure 10, comprenant un registre de sortie de type parallèle-série, et
- la figure 13 illustre un mode de réalisation du multiplieur de l'invention permettant la mise en oeuvre de l'algorithme de Booth.

Avant de décrire des modes de réalisation préférés de l'additionneur et du multiplieur de l'invention, il n'est pas inutile de rappeler la structure générale d'un additionneur et d'un multiplieur standards selon l'art antérieur. Ces opérateurs peuvent traiter deux opérandes de valeur binaire quelconque.

A titre d'exemple d'additionneur selon l'art antérieur, on va décrire un additionneur en technologie CMOS de type "Manchester Carry Chain".

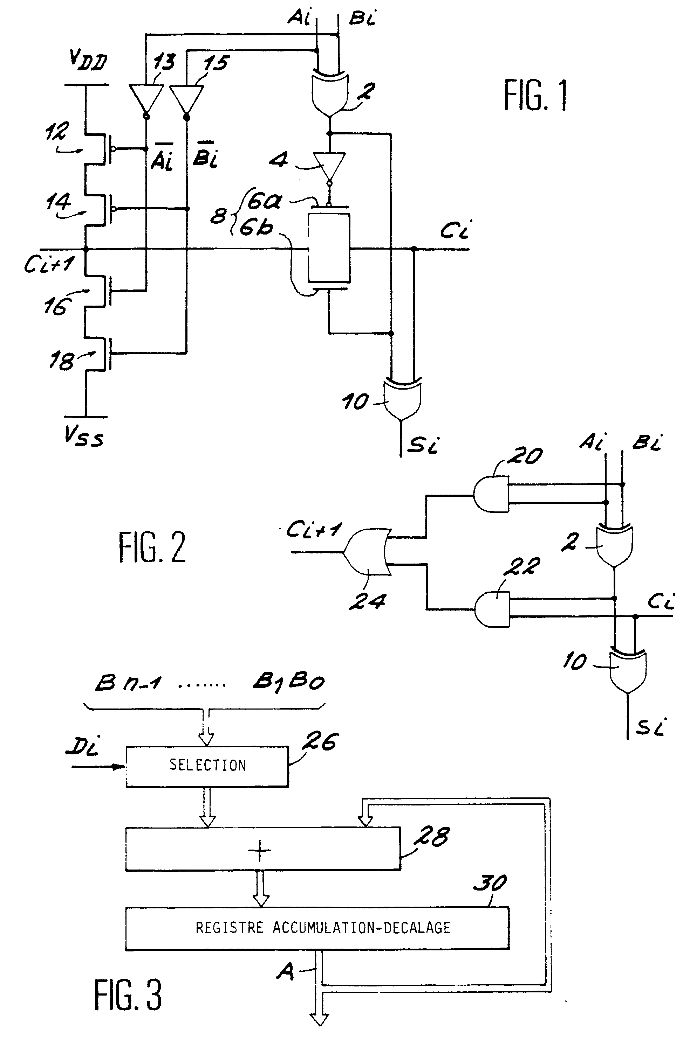

On a représenté sur la figure 1 une cellule d'addition selon l'art connu permettant de calculer la somme de deux bits $A_i$ et $B_i$ de valeur quelconque. L'additionneur complet se compose d'un ensemble de telles cellules d'addition, recevant chacune un bit de chacun des deux opérandes A et B.

Cette cellule d'addition comprend, outre les deux entrées de donnée pour recevoir les bits $A_i$ et $B_i$, une entrée de retenue pour recevoir le bit de retenue $C_i$ de la cellule d'addition précédente de l'additionneur. La somme $S_i$ des deux bits $A_i$ et $B_i$ est délivrée sur une sortie et la retenue $C_{i+1}$ sur une autre sortie.

La cellule d'addition représentée sur la figure 1 comprend une porte OU-EXCLUSIF 2 recevant sur chacune de ses entrées les bits $A_i$ et $B_i$, un inverseur 4 dont l'entrée est reliée à la sortie de la porte OU-EXCLUSIF 2, un interrupteur 8 composé classiquement d'un transistor CMOS à canal P 6a et d'un transistor CMOS à canal n 6b, et une porte OU-EXCLUSIF 10 dont une entrée est reliée à la sortie de la porte OU-EXCLUSIF 2 et dont l'autre entrée reçoit le bit de retenue $C_i$.

L'interrupteur 8 est placé sur une ligne reliant l'entrée de retenue $C_i$ à la sortie de retenue $C_{i+1}$. Cet interrupteur est commandé par le signe du signal de sortie de la porte OU-EXCLUSIF 2.

Cette cellule d'addition comprend également deux transistors CMOS à canal P 12, 14 disposés en série entre la sortie de retenue $C_{i+1}$ et un potentiel fixe $V_{dd}$ correspondant à l'état logique "0". Elle comprend, symétriquement, deux transistors CMOS à canal N 16, 18 reliés en série et disposés entre la sortie de retenue $C_{i+1}$ et un potentiel fixe $V_{ss}$ correspondant à l'état logique "1". Les transistors 12 et 16 sont commandés par le complément $\overline{A_i}$ du bit $A_i$, produit par un inverseur 13 et les transistors 14 et 18 par le complément $\overline{B_i}$ du bit $B_i$, produit par un inverseur 15.

On a représenté sur la figure 2 la cellule d'addition de la figure 1 sous la forme d'un ensemble de portes logiques. Les portes ET 20, 22 et la porte OU 24 représentent la même fonction que l'ensemble constitué par les inverseurs 4, 13 et 15, l'interrupteur 8 et les transistors 12, 14, 16 et 18.

Sur la figure 2, la porte ET 20 comprend deux entrées recevant les bits $A_i$ et $B_i$, la porte 22 comprend deux entrées recevant le signal délivré par la porte OU-EXCLUSIF 2 et le bit $C_i$, et la porte OU 24 comprend deux entrées reliées aux sorties des portes ET 20, 22, ladite porte OU 24 délivrant le bit de retenue $C_{i+1}$.

Un additionneur classique est constitué par la mise en série d'une pluralité de cellules d'addition tel que représenté sur les figures 1 et 2, la sortie de retenue de chaque cellule étant reliée à l'entrée de retenue d'une cellule suivante.

Un multiplieur binaire parallèle-série, selon l'art connu, pour multiplier deux opérandes binaires B et D de valeur quelconque et comprenant un tel additionneur est représenté sur la figure 3.

L'additionneur 28 comprend deux entrées et délivre sur sa sortie la somme des opérandes appliqués sur ses entrées. La sortie de cet additionneur est reliée à l'entrée d'un registre d'accumulation-décalage 30 qui mémorise le résultat intermédiaire de la multiplication et le décalage d'un bit vers la droite de ce résultat à chaque itération. La sortie du registre d'accumulation-décalage est rebouclée vers une des entrées de l'additionneur 28.

Le multiplieur comprend enfin un moyen de sélection 26 qui reçoit un opérande B sur une entrée parallèle et l'autre opérande D sur une entrée série, et qui délivre l'opérande parallèle vers une entrée du moyen d'addition lorsque la valeur logique du bit appliqué sur l'entrée série est "1", et "0" dans le cas

4

contraire.

On a rappelé en référence aux figures 1 à 3 des structures classiques d'un additionneur et d'un multiplieur standards. On va maintenant décrire des modes de réalisation d'un additionneur et d'un multiplieur selon l'invention.

Selon l'invention, chaque cellule d'addition d'un additionneur destiné à additionner un opérande fixe de valeur connue et un opérande de valeur quelconque a une structure particulière qui est fonction de la valeur spécifique de l'opérande fixe.

Ainsi, dans un additionneur conforme à l'invention, il y a deux types de cellules d'addition : les cellules d'addition associées à un bit de l'opérande fixe de valeur logique "0" et les cellules d'addition associées à un bit de l'opérande fixe de valeur logique "1".

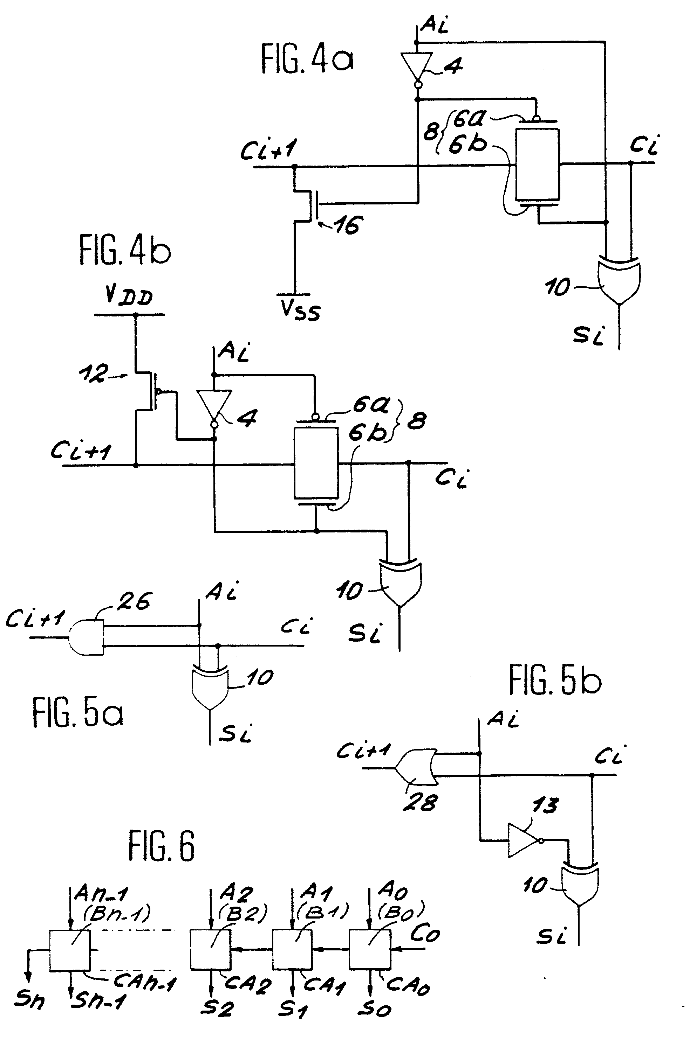

On a représenté sur les figures 4a et 4b des cellules d'addition, à titre d'exemple en technologie CMOS, correspondant à ces deux types de cellule d'addition. Ces cellules peuvent se déduire de la cellule d'addition connue représentée sur la figure 1 par suppression de certains éléments.

Ainsi, la cellule d'addition de la figure 4a se déduit de la cellule d'addition de la figure 1 par suppression de la porte OU-EXCLUSIF 2, de l'inverseur 15 et des transistors 12, 14, et 18. De plus l'entrée de l'inverseur 4 reçoit directement le bit $A_i$, ce qui permet de supprimer l'inverseur 13. Cet additionneur permet de réaliser l'addition entre un bit $A_i$ de valeur quelconque avec un bit $B_i$ de valeur fixe égale à "0".

La cellule d'addition représentée sur la figure 4b est une cellule d'addition conforme à l'invention pour additionner un bit $A_i$ de valeur binaire quelconque avec un bit $B_i$ de valeur fixe égale à "1".

Cette cellule d'addition se déduit de celle de la figure 1 par suppression de la porte OU-EXCLUSIF 2 et des transistors 14, 16 et 18.

Les cellules d'addition représentées sur les figures 4a et 4b ont été représentées sous forme de portes logiques respectivement sur les figures 5a et 5b. La cellule d'addition représentée sur la figure 4a se réduit ainsi à deux portes logiques : une porte OU-EXCLUSIF 10 et une porte ET 26. Chaque porte reçoit sur une entrée le bit $A_i$ et sur l'autre entrée le bit de retenue $C_i$. La porte ET 26 délivre le bit de retenue $C_{i+1}$ et la porte OU-EXCLUSIF 10 le bit de somme $S_i$.

La cellule d'addition représentée sur la figure 5b se compose d'un inverseur 13, d'une porte OU-EXCLUSIF 10 et d'une porte OU 28. L'inverseur 13 reçoit le bit $A_i$. Sa sortie est reliée à une entrée de la porte OU-EXCLUSIF 10 dont l'autre entrée reçoit le bit de retenue $C_i$. La sortie de la porte OU-EXCLUSIF 10 délivre la somme $S_i$. Enfin, la porte OU 28 reçoit sur ses entrées les bits $A_i$ et $C_i$ et délivre le bit de retenue $C_{i+1}$.

L'additionneur complet se compose de cellules d'addition tel que représenté sur les figures 4a et 4b. Ces cellules d'addition sont reliées en série, c'est-à-dire que la sortie de retenue d'une cellule d'addition est reliée à l'entrée de retenue de la cellule d'addition suivante.

On a représenté schématiquement sur la figure 6 un additionneur selon l'invention. Il comprend un ensemble de cellules d'addition $CA_0$, $CA_1$, ..., $CA_{n-1}$ reliées en série. Chaque cellule d'addition reçoit un bit $A_i$, où $0 \leq i \leq n-1$, de l'opérande variable $A_{n-1}A_{n-2}...A_0$.

Selon l'invention, chaque cellule d'addition $CA_i$ a une structure spécifique, fonction de la valeur logique du bit $B_i$ de l'opérande fixe et connu $B_{n-1}B_{n-2}...B_0$.

L'additionneur comprend donc deux types de cellules d'addition, qui peuvent être par exemple les cellules d'addition représentées sur les figures 4a et 4b.

L'additionneur peut être utilisé quel que soit le signe des deux opérandes. Dans le cas où l'opérande fixe est négatif, i de choisir les cellules d'addition pour que cet opérande fixe soit représenté en code complément à 2.

L'additionneur peut également être utilisé comme soustracteur. Il suffit dans ce cas d'échanger les cellules d'addition des premier et second types, ce qui revient comme dans le cas précédent à additionner le complément de l'opérande fixe, et de câbler le bit de retenue $C_0$ à la valeur logique "1", ce qui revient à additionner l'opérande fixe -B à l'opérande variable A.

L'utilisation de cellules d'addition câblées suivant la valeur du bit de l'opérande fixe apporte un gain de surface très important. En effet, les cellules d'addition représentées sur les figures 4a et 4b ne nécessitent que neuf transistors alors que la cellule d'addition, selon l'art antérieur, représentée sur la figure 1 nécessite 22 transistors. Ceci apporte un gain en surface de silicium de plus de 50%.

De plus, le chemin critique dans l'additionneur de l'invention étant moins chargé que dans un additionneur ne comprenant que des cellules d'addition suivant la figure 1, les performances de l'additionneur de l'invention sont supérieures.

Ces performances peuvent être améliorées, de manière connue, en utilisant alternativement une cellule d'addition conçue pour recevoir un bit de retenue non-complémenté et pour délivrer un bit de retenue complémenté, et une cellule d'addition pour recevoir un bit de retenue complémenté et pour délivrer un bit

EP 0 262 032 B1

de retenue non-complémenté.

Une telle structure permet en effet d'accélérer la propagation de la retenue dans les cellules d'addition successives de l'additionneur.

Pour mettre en oeuvre cette technique, dans le cadre de l'invention, il faut remplacer chacun des deux types de cellules d'addition, tel que représenté sur les figures 4a et 4b, par deux sous-types de cellules d'addition, l'un correspondant au cas où le bit de retenue reçu est non-complémenté et l'autre au cas où le bit de retenue reçu est complémenté.

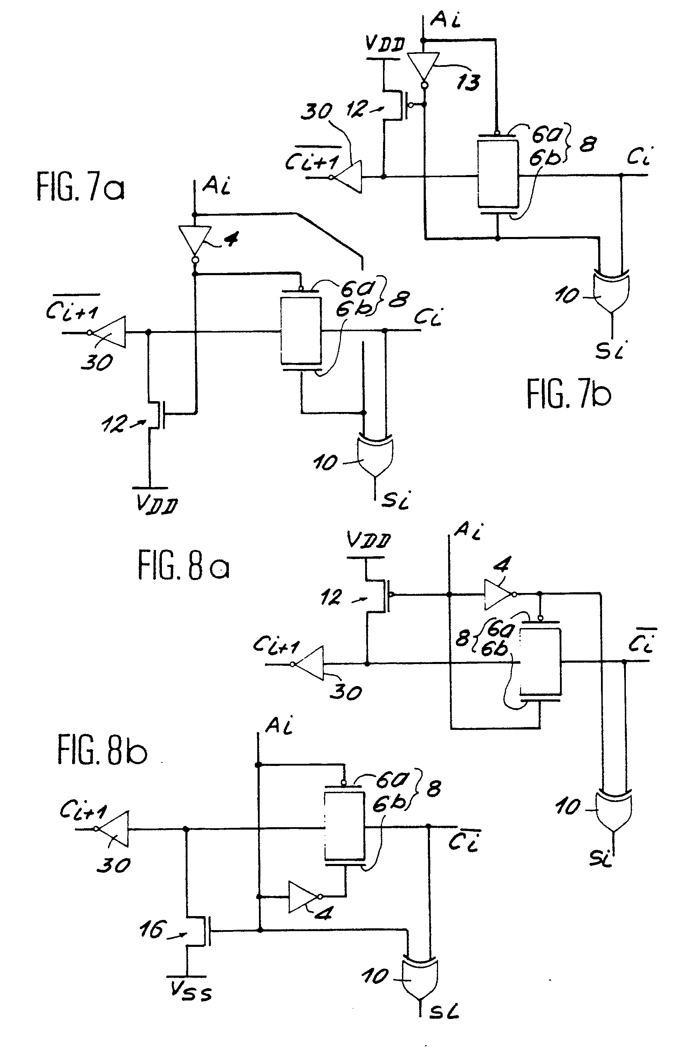

Les figures 7a et 7b représentent des cellules d'addition correspondant respectivement à un bit $B_i$ de valeur logique "0" et un bit $B_i$ de valeur logique "1", recevant le bit de retenue $C_i$ et délivrant le bit de retenue complémenté $\overline{C_{i+1}}$.

Dans le mode de réalisation représenté sur les figures 7a et 7b, les cellules d'addition sont identiques aux cellules d'addition représentées respectivement sur les figures 4a et 4b complétées par un inverseur 30 pour complémenter la valeur du bit de retenue de sortie.

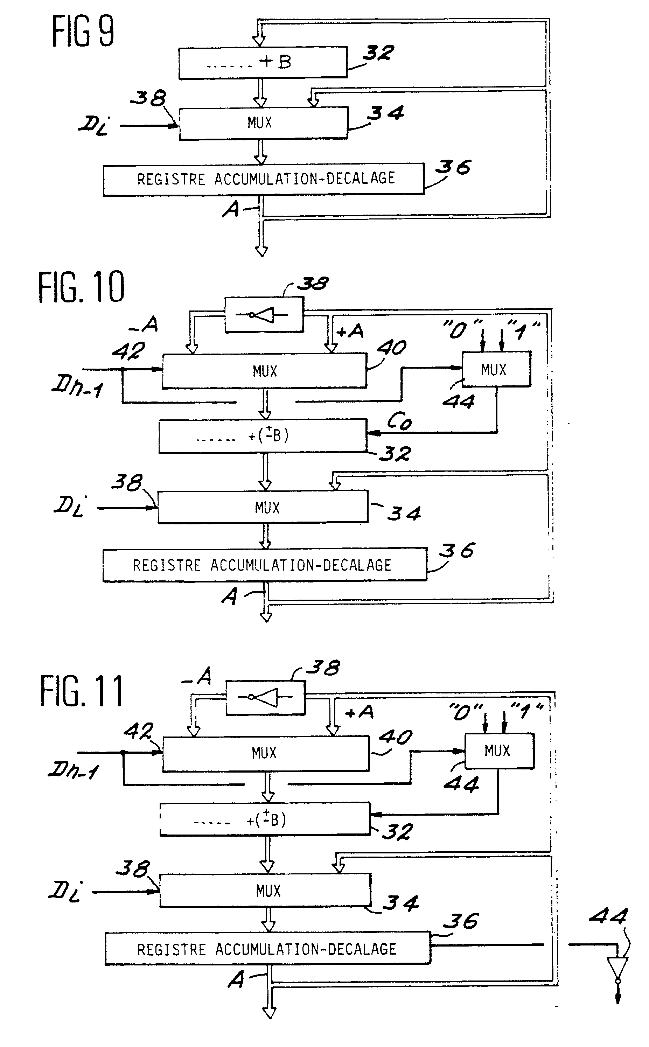

De la même manière, les cellules d'addition représentées sur les figures 8a et 8b correspondent respectivement au bit $B_i$ de valeur logique "0" et au bit $B_i$ de valeur logique "1", recevant le bit de retenue complémenté $\overline{C_i}$ et délivrant le bit de retenue $C_{i+1}$.

La cellule d'addition représentée sur la figure 8a est pratiquement identique à la figure d'addition représentée sur la figure 7b. Elle n'en diffère que par le fait que le bit $A_i$ reçu par le transistor 6a est complémenté par l'intermédiaire de l'inverseur 4, alors que les transistors 6b et 12 reçoivent directement le bit $A_i$. De la même manière, la cellule d'addition représentée sur la figure 8b est pratiquement identique à la cellule d'addition représentée sur la figure 7a, la différence étant ici, au contraire, que le bit $A_i$ est appliqué directement sur les transistors 6a et 16, alors que le transistor 6b reçoit le bit $A_i$ complémenté par l'inverseur.

On a décrit en référence aux figures 4a, 4b, 7a, 7b, 8a et 8b des modes de réalisation particuliers de cellules d'addition pour un additionneur conforme à l'invention. On a choisi à titre d'exemple de décrire des cellules d'addition en technologie CMOS. Cependant, il est clair que l'invention peut être mise en oeuvre à partir d'une architecture différente de cellules d'addition réalisée dans une technologie quelconque.

L'addditionneur que l'on vient de décrire constitue un premier objet de l'invention. Cet additionneur peut avantageusement être utilisé pour la réalisation d'un multiplieur binaire pour multiplier un opérande de valeur quelconque avec un opérande de valeur fixe et connue. Ceci constitue le deuxième objet de l'invention.

Un multiplieur binaire selon l'invention est représenté schématiquement sur la figure 9. Il se compose de trois éléments : un additionneur 32 selon l'invention, un multiplexeur 34 et un registre d'accumulation et de décalage 36.

Les entrées et les sorties des éléments constituant le multiplieur sont de type parallèle. Le registre 36 comprend une entrée et une sortie. L'additionneur 32 comprend une entrée reliée à la sortie du registre 36, et une sortie. Le multiplexeur 34 comprend deux entrées, l'une reliée à la sortie de l'additionneur 32 et l'autre reliée à la sortie du registre 36. La sortie du multiplexeur 34 est reliée l'entrée du registre 36.

L'opérande fixe et connu B est matérialisé dans la structure de l'additionneur 32 comme on l'a décrit en référence à la figure 6. L'opérande non-fixe D est appliqué sous forme série sur une entrée de commande 38 du multiplexeur 34.

Le multiplexeur 34 fonctionne de la manière suivante. Si le bit $D_i$ de rang i, où $0 \leq i \leq n-1$, de l'opérande D appliqué sur l'entrée 38 du multiplexeur 34 à la valeur "0", le multiplexeur 34 est commandé de manière à relier la sortie du registre 36 à l'entrée de ce registre 36. En revanche, si le bit $D_i$ a la valeur "1", l'entrée du registre 36 se trouve reliée à la sortie de l'additionneur 32.

Le multiplieur de l'invention représenté sur la figure 9 a une structure légèrement différente de celle du multiplieur selon l'art antérieur représenté sur la figure 3. La différence principale réside dans le fait que l'additionneur 28 (figure 3) est un additionneur standard pouvant additionner deux opérandes quelconques alors que l'additionneur 32 (figure 9) est un additionneur dédié ne pouvant additionner qu'un opérande prédéterminé B à un opérande quelconque.

Les avantages du multiplieur de l'invention sur les multiplieurs de l'art antérieur résultent de l'utilisation de l'additionneur 32. Ces avantages sont une surface plus faible sur un circuit intégré et une vitesse de traitement plus élevée grâce à l'optimisation de l'additionneur.

Dans le mode de réalisation représenté sur la figure 9, l'additionneur peut uniquement additionner le contenu du registre 36 avec l'opérande fixe B. Ce dernier peut être positif ou négatif. Dans le second cas, comme on l'a indiqué dans la description de la figure 6, l'opérande B est codé en complément à 2 et la première cellule d'addition de l'additionneur reçoit, sur son entrée de retenue $C_0$, un bit de valeur logique "1".

6

Le traitement du signe de l'opérande série est plus délicat. En effet, en code complément à 2, le bit le plus significatif de l'opérande série A représente un poids négatif ; il faut donc ajouter au contenu du registre 36 l'opposé de l'opérande fixe B pour obtenir le résultat correct.

Ceci ne peut pas être réalisé avec l'additionneur 32 du multiplieur de la figure 9, qui ne peut, par construction, qu'additionner que le seul opérande B.

Pour tourner cette difficulté, on se propose de modifier le multiplieur de la figure 9 de manière à pouvoir additionner l'opposé de l'opérande fixe B. Un tel multiplieur modifié est représenté sur la figure 10.

Dans ce multiplieur, les éléments identiques à ceux du multiplieur de la figure 9 portent les mêmes références. Le multiplieur de la figure 10 comprend des éléments suplémentaires pour permettre d'inverser le contenu du registre 36. Ces moyens se composent d'un inverseur 38 dont l'entrée est reliée à la sortie du registre 36 et d'un multiplexeur 40 dont une première entrée est à la sortie de l'inverseur 38 et dont l'autre entrée est reliée à la sortie du registre 36. La sortie du multiplexeur 40 est reliée à l'entrée de l'additionneur 32.

Le multiplexeur 40 comprend une entrée de commande 42 pour recevoir le bit de poids le plus fort $D_{n-1}$ de l'opérande série D. Le multiplexeur 40 délivre ainsi sur l'entrée de l'additionneur 32 le contenu du registre 36, si $D_{n-1}$ est égal à "0", ou l'opposé du contenu du registre 36, si $D_{n-1}$ est égal à "1".

Le multiplieur représenté sur la figure 10 comprend en outre un autre multiplexeur 44 commandé également par le bit $D_{n-1}$ de poids le plus fort de l'opérande série D. Ce multiplexeur 44 comporte deux entrées sur lesquelles sont appliqués respectivement des signaux logiques de valeur "0" et "1". La sortie de ce multiplexeur est reliée à l'entrée de retenue $C_0$ de l'additionneur 32.

Comme on l'a indiqué plus haut, l'addition entre l'opérande fixe B et un opérande série D négatif ($D_{n-1}$ de valeur logique "1"), nécessite de pouvoir soustraire du contenu du registre 36 l'opérande fixe B. Ceci n'est pas possible directement avec l'additionneur 32 qui, par construction, ne peut qu'ajouter l'opérande fixe B à l'opérande variable reçu.

Cette opération est remplacée dans le multiplieur 10 par la séquence suivante :
- addition de l'opposé du contenu du registre 36 à l'opérande fixe B, le résultat étant mémorisé dans le registre 36,
- complémentation du contenu du registre 36 par l'intermédiaire de l'inverseur 38, le résultat final de la multiplication étant récupéré en sortie du multiplexeur 40.

La figure 10 illustre un mode de réalisation d'un multiplieur permettant d'additionner l'opérande fixe B à un opérande non-fixe D, quel que soit le signe de ce dernier. De manière générale, l'invention englobe toutes les architectures qui permettent de complémenter au moins l'un des deux opérandes de manière se ramener à une addition produisant l'opposé du résultat cherché, suivi d'une opération de complémentation de ce résultat.

Suivant l'utilisation que l'on souhaite faire du résultat de la multiplication, on peut se contenter du registre d'accumulation-décalage 36 ou ajouter un registre supplémentaire parallèle-série.

Le registre d'accumulation-décalage 36 est suffisant lorsqu'aucun pipeline n'est envisagé. Le registre 36 est avantageusement du type de ceux permettant soit une sortie parallèle, soit une sortie série. Dans ce dernier cas, il est avantageux d'inclure un inverseur 44 sur la sortie série, comme représenté sur la figure 11, de manière à obtenir, dans le cas où l'opérande série est négatif, le complément final du contenu du registre 36. Ceci permet d'économiner un cycle d'horloge par rapport à une complémentation finale du contenu du registre 36 par l'intermédiaire de l'inverseur 38 et du multiplexeur 40.

Dans le cas où plusieurs multiplications doivent être faites en cascade, il est souhaitable de prévoir des possibilités de pipeline entre les multiplieurs successifs. Pour cela, il faut avoir recours à deux registres : un premier registre qui sert d'accumulateur et un deuxième registre qui effectue la conversion de format parallèle-série.

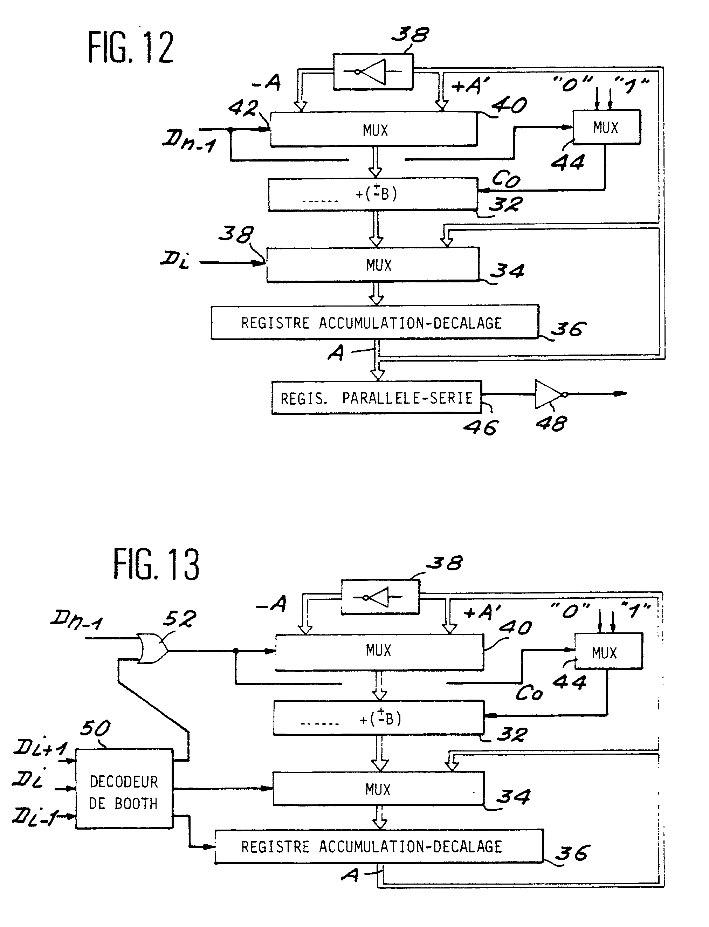

Un tel multiplieur est représenté sur la figure 12. Le registre 36 sert d'accumulateur pour les résultats partiels de la multiplication. A la fin de la multiplication, le contenu du registre 36 est recopié en parallèle dans un registre parallèle-série 46. Un inverseur 48, ayant une fonction identique à l'inverseur 44 du multiplieur de la figure 11, peut être disposé sur la sortie série du registre 46.

L'utilisation simultanée des deux registres 36 et 46 permet d'entamer une seconde multiplication dans le multiplieur pendant que le résultat de la première multiplication subit la conversion de format parallèle-série dans le registre 46.

Dans le multiplieur rep résenté sur la figure 9, et dans ses variantes de réalisation représentées sur les figures 10 à 12, chaque bit $D_i$ de l'opérande série D est traité individuellement. Le nombre d'additions requises pour effectuer la multiplication est donc égal au nombre de bits de l'opérande fixe D.

Dans le domaine des multiplieurs binaires, on connaît un algorithme, dit algorithme de Booth, qui permet de regrouper plusieurs sommes partielles de manière à obtenir le résultat de la multiplication en moins d'additions que l'opérande non-fixe D ne comprend de bits. Par exemple, avec l'algorithme de Booth 3 bits, les bits de l'opérande non-fixe D sont traités trois par trois avec un décalage de deux bits à chaque période d'horloge, ce qui permet d'obtenir le résultat de la multiplication en n/2 additions.

Dans l'algorithme de Booth 3 bits, trois bits consécutifs $D_{i-1}$, $D_i$ et $D_{i+1}$ de l'opérande D sont combinés pour produire une valeur de décodage d suivant le tableau I ci-dessous.

TABLEAU I

| $A_{i+1}$ | $A_i$ | $A_{i-1}$ | $d = -2.A_{i+1} + A_i + A_{i-1}$ |
|-----------|-------|-----------|-----------------------------------|
| 0 | 0 | 0 | 0 |
| 0 | 0 | 1 | +1 |
| 0 | 1 | 0 | +1 |
| 0 | 1 | 1 | +2 |
| 1 | 0 | 0 | -2 |
| 1 | 0 | 1 | -1 |
| 1 | 1 | 0 | -1 |
| 1 | 1 | 1 | 0 |

Cette valeur d définit un coefficient multiplicatif pour l'opérande D, avant qu'il ne soit additionné à l'opérande fixe B.

Les valeurs données dans le tableau I montrent qu'il faut être capable d'additionner à l'opérande fixe B l'une quelconque des valeurs 0, D, 2D, -D et -2D. Pour cela, il faut modifier le multiplieur de manière à pouvoir :
- décaler le registre 36 de 1 bit et de 2 bits. On engendre ainsi les valeurs D et 2D,
- commander le multiplexeur 40 pour complémenter le contenu du registre et produire ainsi les valeurs -D et -2D,
- mémoriser la polarité du résultat stocké dans le registre 36.

Un multiplieur selon l'invention mettant en oeuvre l'algorithme de Booth 3 bits est représenté schématiquement sur la figure 13.

Ce multiplieur comprend les mêmes éléments que le multiplieur représenté sur la figure 10. Il comprend en outre un décodeur de Booth 50 comprenant trois entrées sur lesquelles sont appliqués simultanément trois bits consécutifs $D_{i-1}$, $D_i$ et $D_{i+1}$ de l'opérande variable D.

Le multiplieur comprend également une porte OU 52 dont une entrée reçoit le bit de poids le plus fort $D_{n-1}$ de l'opérande D et dont l'autre entrée est reliée à une sortie du décodeur 50, la sortie de la porte OU 52 étant reliée à l'entrée de commande 42 du multiplexeur 40.

Le décodeur 50 comprend un registre pour stocker un bit d'état, afin de mémoriser la polarité du contenu du registre 36. Il comprend également un moyen pour calculer la valeur d indiquée dans le tableau I en fonction des bits reçus et pour délivrer en fonction de cette valeur et du bit d'état mémorisé des signaux de commande vers le registre 36, le multiplexeur 34 et la porte OU 52.

TABLEAU II

| Type de multiplieur | tr | T | $F = tr \times T$ |
|---------------------|-----|-----|-------------------|
| Lecture d'une table dans une mémoire morte | $3.N.2^N$ | 1 | $3.N.2^N$ |
| Multiplieur standard (fig.3) | 48.N | N | $48.N^2$ |
| Multiplieur standard (fig.3) + décodeur de Booth 3 bits | 50.N | N/2 | $25.N^2$ |
| Multiplieur suivant (fig.10) | 24.N | N | $24.N^2$ |
| Multiplieur suivant (fig.13) (décodeur de Booth 3 bits | 26.N | N/2 | $13.N^2$ |

Le tableau II ci-dessus illustre les performances relatives du multiplieur de l'invention et des multiplieurs connus utilisant soit un multiplieur standard pouvant multiplier deux opérandes quelconques, soit une lecture dans une table implantée dans une mémoire morte.

Les performances sont exprimées par le facteur de mérite F, égal au produit de la surface de silicium, proportionnelle au nombre de transistors tr, requise pour réaliser le multiplieur par le nombre T de périodes d'horloge nécessaire pour faire la multiplication. Les paramètres tr et T sont exprimés en fonction du nombre de bits N de chaque opérande.

On constate que le multiplieur de la figure 10, conforme à l'invention, a un facteur de mérite légèrement supérieur à un multiplieur classique comprenant un décodeur de Booth. Le facteur de mérite est en outre sensiblement doublé si l'on dote le multiplieur selon la figure 10 d'un décodeur de Booth.

## Revendications

1. Additionneur binaire pour additionner un premier opérande A de n bits $A_{n-1}$, ..., $A_0$, de valeur binaire quelconque, à un second opérande B de n bits, $B_{n-1}$, ..., $B_0$, de valeur binaire prédéterminée, ledit additionneur comprenant n cellules d'addition $CA_{n-1}$, ..., $CA_0$, chaque cellule étant munie d'une entrée de données pour recevoir un bit $A_i$, $0 \leq i \leq n-1$, du premier opérande, une entrée de retenue pour recevoir un bit de retenue $C_i$, une sortie de données $S_i$ et une sortie de retenue pour délivrer un bit de retenue $C_{i+1}$, la sortie de retenue de la cellule d'addition de rang j, $0 \leq j \leq n-2$, étant reliée à l'entée de retenue de la cellule d'addition de rang j+1, ledit additionneur étant caractérisé en ce que :
   - chaque cellule d'addition $CA_i$, $0 \leq i \leq n-1$ est câblée selon la valeur du bit $B_i$ de l'opérande B,
   - chaque cellule d'addition associée à un bit $B_i$ de valeur logique "0" de l'opérande fixe B comprenant une porte ET (26) et une porte OU-EXCLUSIF (10), chacune recevant sur ses entrées les bits $A_i$ et $C_i$, la porte ET délivrant le bit de retenue $C_{i+1}$ et la porte OU-EXCLUSIF le bit de somme S,
   - chaque cellule d'addition associée à un bit $B_i$ de valeur logique "1" de l'opérande fixe B comprend une porte OU (28) recevant les bits $A_i$ et $C_i$ et délivrant le bit de retenue $C_{i+1}$, un inverseur (4) recevant le bit $A_i$, et une porte OU-EXCLUSIF (10) recevant le bit $C_i$ et le bit délivré par l'inverseur, et délivrant le bit de somme $S_i$.

2. Additionneur selon la revendication 1, caractérisé en ce qu'il comprend des cellules d'addition suivant au moins deux des quatre types suivants :
   - une cellule d'addition associée à un bit $B_i$ de valeur logique "0" et dont la structure est conçue pour recevoir un bit de retenue $C_i$ et pour délivrer un bit de retenue complémenté $\bar{C}_{i+1}$,
   - une cellule d'addition associée à un bit $B_i$ de valeur logique "1" et dont la structure est conçue pour recevoir un bit de retenue $C_i$ et pour délivrer un bit de retenue complémenté $\bar{C}_{i+1}$,
   - une cellule d'addition associée à un bit $B_i$ de valeur logique "0" et dont la structure est conçue pour recevoir un bit de retenue complémenté $\bar{C}_i$ et pour délivrer un bit de retenue $C_{i+1}$, et
   - une cellule d'addition associée à un bit $B_i$ de valeur logique "1" et dont la structure est conçue pour recevoir un bit de retenue complémenté $\bar{C}_i$ et pour délivrer un bit de retenue $C_{i+1}$ ,
   les cellules d'addition de l'additionneur étant choisies suivant la valeur binaire de l'opérande fixe B et de manière à respecter la polarité du bit de retenue transmis entre deux cellules consécutives.

3. Multiplieur binaire parallèle-série pour la multiplication d'un opérande fixe B de n bits $B_{n-1}$ , $B_{n-2}$ , ..., $B_0$ par un opérande D de n bits $D_{n-1}$ , $D_{n-2}$ , ..., $D_0$ de valeur quelconque, ledit multiplieur comprenant un registre d'accumulation et de décalage (36) pour mémoriser un résultat partiel de la multiplication, ledit registre comportant une entrée et une sortie, ledit multiplieur étant caractérisé en ce qu'il comprend, en outre, un additionneur (32) selon l'une quelconque des revendications 1 à 2, ledit additionneur étant câblé seton la valeur de l'opérande fixe et comportant une entrée reliée à la sortie du registre (36) et une sortie, et un multiplexeur (34) ayant deux entrées reliées respectivement à la sortie de l'additionneur et à la sortie du registre, et une sortie reliée à l'entrée du registre, ledit multiplexeur comportant également une entrée de commande (38) sur laquelle est appliqué l'opérande non-fixe D sous forme série.

4. Multiplieur selon la revendication 3, pour permettre la multiplication de deux opérandes B et D de signes contraires, caractérisé en ce que le multiplieur comprend en outre :
   - un deuxième multiplexeur (40) disposé entre la sortie du registre d'acccumulation et de décalage (36) et l'entrée de l'additionneur (32), ledit second multiplexeur comprenant deux entrées reliées respectivement à la sortie du registre et à la sortie d'un inverseur (38) dont l'entrée est reliée à la sortie du registre, et
   - un troisième multiplexeur (44) ayant deux entrées maintenues respectivement dans les états logiques "0" et "1" et dont la sortie est reliée à une entrée de retenue ($C_0$) de l'additionneur, lesdits deuxième et troisième multiplexeurs étant commandés par le bit de poids le plus fort $D_{n-1}$

de l'opérande D.

5. Multipleur selon la revendication 3 ou 4, caractérisé en ce qu'il comprend en outre un inverseur (44) sur la sortie-série du registre à accumulation décalage (36).

6. Multiplieur selon la revendication 3 ou 4, caractérisé en ce qu'il comprend en outre un registre parallèle-série (46) sur la sortie parallèle du registre à accumulation décalage (36) et un inverseur (48) sur la sortie du registre parallèle série (46).

7. Multiplieur selon la revendication 6, caractérisé en ce qu'il comprend un décodeur de Booth, ledit décodeur recevant les bits de l'opérande D par groupes de 3 bits consécutifs, ledit décodeur produisant des signaux pour commander, suivant la valeur logique desdits bits, les multiplexeurs (34, 40) et le registre (36), ledit décodeur comprenant un moyen de stockage d'un bit d'état pour mémoriser la polarité du contenu du registre.

## Claims

1. Binary adder for adding a first operand A of n bits $A_{n-1}$, .... $A_0$ having a random binary value to a second operand B of n bits $B_{n-1}$, ..... $B_0$ of predetermined binary value, said adder having n addition cells $CA_{n-1}$, .... $CA_0$, each cell being provided with a data input for receiving a bit $A_i$, $0 \leq i \leq n-1$ from the first operand, a carry input for receiving a carry bit $C_i$, a data output $S_i$ and a carry output for supplying a carry bit $C_{i+1}$, the carry output of the addition cell of rank j, $0 \leq j \leq n-2$ being connected to the carry input of the addition cell of rank j + 1, characterized in that each addition cell $CA_i, 0 \leq i \leq n-1$ is wired as a function of the value of bit $B_i$ of the operand B, each addition cell associated with a bit $B_i$ of logic value "0" of the fixed operand B comprises an AND gate (26) and a XOR gate (10), each receiving on its inputs bits $A_i$ and $C_i$, the AND gate supplying the carry bit $C_{i+1}$ and the XOR gate the sum bit $S_i$, each addition cell associated with a bit $B_i$ of logic value "1" of the fixed operand B comprises an OR gate (28) receiving bits $A_i$ and $C_i$ and supplying the carry bit $C_{i+1}$, an inverter receiving bit $A_i$ and a XOR gate (10) receiving bit $C_i$ and the bit supplied by the inverter and supplying the sum bit $S_i$.

2. Binary adder according to claim 1, characterized in that it comprises addition cells in accordance with at least two of the four following types:

   an addition cell associated with a bit $B_i$ of logic value "0" and whose structure is designed to receive a carry bit $C_i$ and for supplying a complemented carry bit $\overline{C_{i+1}}$;

   an addition cell associated with a bit $B_i$ of logic value "1" and whose structure is designed to receive a carry bit $C_i$ and for supplying a complemented carry bit $\overline{C_{i+1}}$;

   an addition cell associated with a bit $B_i$ of logic value "0" and whose structure is designed to receive a complemented carry bit $\overline{C_i}$ and for supplying a carry bit $C_{i+1}$; and

   an addition cell associated with a bit $B_i$ of logic value "1" and whose structure is designed to receive a complemented carry bit $\overline{C_i}$ and for supplying a carry bit $C_{i+1}$, the addition cells of the adder being chosen in accordance with the binary value of the fixed operand B and so as to respect the polarity of the carry bit transmitted between two consecutive cells.

3. A parallel-serial binary multiplier for the multiplication of a fixed operand B by n bits $B_{n-1}$, $B_{n-2}$, ..... $B_0$ by an operand D of n bits $D_{n-1}$, $D_{n-2}$, ..... $D_0$ of random value, the multiplier comprising an accumulator and shift register (36) for storing a partial multiplication result, said register having an input and an output, characterized in that the multiplier also comprises an adder (32) according to either of the claims 1 and 2, said adder being wired according to the value of the fixed operand and having an input connected to the output of the register (36) and an output and a first multiplexer (34) having two inputs respectively connected to the output of the adder and to the output of the register and an output connected to the input of the register, said multiplexer also having a control input (38) to which is applied the non-fixed operand D in serial form.

4. Multiplier according to claim 3 for permitting the multiplication of two operands B and D of opposite signs, characterized in that the multiplier also comprises:

a second multiplexer (40) located between the output of the accumulator-shift register (36) and the input of the adder (32), said second multiplexer having two inputs respectively connected to the output of the register and to the output of an inverter (38), whose input is connected to the output of the register; and

a third multiplexer (44) having two inputs respectively maintained in logic states "0" and "1" and whose output is connected to a carry input $C_0$ of the adder, said second and third multiplexers being controlled by the most significant bit $D_{n-1}$ of operand D.

5. Multiplier according to claims 3 or 4, characterized in that it also comprises an inverter (44) on the serial output of the accumulator-shift register (36).

6. Multiplier according to claims 3 or 4, characterized in that it also comprises a parallel-serial register (46) on the parallel output of the accumulator-shift register (36) and an inverter (48) on the output of the parallel-serial register (46).

7. Multiplier according to claim 6, characterized in that it comprises a Booth decoder, said decoder receiving the bits from operand D in groups of 3 consecutive bits, said decoder producing signals for controlling, as a function of the logic value of said bits, the multiplexers (34, 40) and the register (36), said decoder having a storage means for a status bit for storing the polarity of the content of the register.

## Patentansprüche

1. Binärer Addierer zum Addieren eines ersten Operanden aus n Bits $A_{n-1}$, ..., $A_0$ mit einem beliebigen binären Wert zu einem zweiten Operanden B aus n Bits $B_{n-1}$, ..., $B_0$ mit einem vorgegebenen binären Wert, wobei der Addierer n Addierzellen $CA_{n-1}$, ..., $CA_0$ umfaßt, wobei jede Zelle mit einem Dateneingang zum Erhalt eines Bits $A_i$ mit $0 \leq i \leq n-1$ des ersten Operanden, einem Übertrageingang zum Erhalt eines Übertragbits $C_i$, einem Datenausgang $S_i$ und einem Übertragausgang zum Ausgeben eines Übertragbits $C_{i+1}$ versehen ist, wobei der Übertragausgang der Addierzelle der Zeile j mit $0 \leq j \leq n-2$ mit dem Übertrageingang der Übertragzelle der Zeile $j+1$ verbunden ist, wobei der Addierer dadurch gekennzeichnet ist, daß :
   - jede Addierzelle $CA_i$ mit $0 \leq i \leq n-1$ entsprechend dem Wert des Bits $B_i$ des Operanden B verschaltet ist.
   - jede mit einem Bit $B_i$ des logischen Werts "0" des festen Operanden B verbundene Addierzelle ein UND-Gatter (26) und ein exklusives ODER-Gatter (10) umfaßt, wobei jedes an seinen Eingängen die Bits $A_i$ und $C_i$ erhält, wobei das UND-Gatter das Übertragbit $C_{i+1}$ abgibt und das exklusive ODER-Gatter das Summenbit S abgibt,
   - jede mit einem Bit $B_i$ des logischen Werts "1" des festen Operanden B verbundene Addierzelle ein ODER-Gatter (28), das die Bits $A_i$ und $C_i$ erhält und das Übertragbit $C_{i+1}$ abgibt, einen Inverter (4), der das Bit $A_i$ erhält, und ein exklusives ODER-Gatter (10) umfaßt, das das Bit $C_i$ und das von dem Inverter abgegebene Bit erhält und das Summenbit $S_i$ abgibt.

2. Addierer nach Anspruch 1, dadurch gekennzeichnet, daß er Addierzellen nach wenigstens einem der folgenden vier Typen umfaßt:
   - eine Addierzelle, die mit einem Bit $B_i$ des logischen Wert "0" verbunden ist und deren Struktur ausgelegt ist, ein Übertragbit $C_i$ zu empfangen und ein komplementäres Übertragbit $\overline{C}_{i+1}$ abzuge-ben,
   - eine Addierzelle, die mit einem Bit $B_i$ des logischen Wert "1" verbunden ist und deren Struktur ausgelegt ist, ein Übertragbit $C_i$ zu empfangen und ein komplementäres Übertragbit $\overline{C}_{i+1}$ abzuge-ben,
   - eine Addierzelle, die mit einem Bit $B_i$ des logischen Wert "0" verbunden ist und deren Struktur ausgelegt ist, ein komplementäres Übertragbit $\overline{C}_i$ zu empfangen und ein Übertragbit $C_{i+1}$ abzuge-ben,
   - eine Addierzelle, die mit einem Bit $B_i$ des logischen Wert "1" verbunden ist und deren Struktur ausgelegt ist, ein komplementäres Übertragbit $\overline{C}_i$ zu empfangen und ein Übertragbit $C_{i+1}$ abzuge-

ben,

wobei die Addierzellen des Addierers entsprechend dem binären Wert des festen Operanden B und derart ausgewählt werden, daß die Polarität des zwischen zwei aufeinanderfolgenden, übertragenen Übertragbits berücksichtigt wird.

3. Binärer, parallel-serieller Multiplizierer zur Multiplikation eines festen Operanden B aus n Bits $B_{n-1}$, $B_{n-2}$, ..., $B_0$ mit einem Operanden D aus n Bits $D_{n-1}$, $D_{n-2}$, ..., $D_0$ mit beliebigem Wert, wobei der Multiplizierer ein Akkumulations- und Schieberegister (36) besitzt, um ein Teilergebnis der Multiplikation zu speichern, wobei das Register einen Eingang und einen Ausgang umfaßt, wobei der Multiplizierer dadurch gekennzeichnet ist, daß er außerdem einen Addierer (32) nach einem der Ansprüche 1 bis 2, wobei der Addierer entsprechend dem Wert des festen Operanden verschaltet ist und einen mit dem Ausgang des Registers (36) verbundenen Eingang und einen Ausgang umfaßt, und einen Multiplexer (34) umfaßt, der zwei Eingänge, die jeweils mit dem Ausgang des Addierers und dem Ausgang des Registers verbunden sind, und einen Ausgang besitzt, der mit dem Eingang des Registers verbunden ist, wobei der Multiplexer außerdem einen Steuereingang (38) besitzt, an den der nicht feste Operand C in serieller Form angelegt wird.

4. Multiplikator nach Anspruch 3, um die Multiplikation von zwei Operanden B und D mit entgegengesetztem Vorzeichen zu ermöglichen, dadurch gekennzeichnet, daß der Multiplikator außerdem umfaßt:
   - einen zweiten Multiplexer (40), der zwischen dem Ausgang des Akkumulations- und Schieberegisters (36) und dem Eingang des Addierers (32) angeordnet ist, wobei der zweite Multiplexer zwei Eingänge umfaßt, die jeweils mit dem Ausgang des Registers und dem Ausgang des Inverters (38), dessen Eingang mit dem Ausgang des Registers verbunden ist, verbunden sind, und
   - einen dritten Multiplexer (44), der zwei Eingänge besitzt, die jeweils in den logischen Zuständen "0" und "1" gehalten werden, und dessen Ausgang mit einem Übertrageingang ($C_0$) des Addierers verbunden ist,
   wobei die zweiten und dritten Multiplexer von dem höchstwertigsten Bit $D_{n-1}$ des Operanden D gesteuert werden.

5. Multiplizierer nach Anspruch 3 oder 4, dadurch gekennzeichnet, daß er außerdem einen Inverter (44) am seriellen Ausgang des Akkumulations- und Schieberegisters (36) umfaßt.

6. Multiplizierer nach Anspruch 3 oder 4, dadurch gekennzeichnet, daß er außerdem ein parallel-serielles Register (46) am Parallelausgang des Akkumulations- und Schieberegisters (36) und einen Inverter (48) am parallel-seriellen Registerausgang umfaßt.

7. Multiplizierer nach Anspruch 6, dadurch gekennzeichnet, daß er einen Booth-Dekodierer umfaßt, wobei der Dekodierer die Bits des Operanden D in Gruppen von 3 aufeinanderfolgenden Bits erhält, wobei der Dekodierer Signale erzeugt, um entsprechend dem logischen Wert der Bits die Multiplexer (34, 40) und das Register (36) zu steuern, wobei der Dekodierer eine Vorrichtung zum Speichern eine Zustandsbits umfaßt, um die Polarität des Registerinhalts zu speichern.

FIG. 1

FIG. 2

FIG. 3

$V_{DD}$

$V_{SS}$

$A_i$  $B_i$

$\overline{A_i}$  $\overline{B_i}$

$C_{i+1}$

$C_i$

$S_i$

13
15
12
14
16
18
2
4
8 { 6a, 6b
10

$C_{i+1}$
$A_i$  $B_i$
20
2
22
24
$C_i$
10
$S_i$

$B_{n-1}$ ....... $B_1 B_0$

$D_i$

SELECTION    26

+    28

REGISTRE ACCUMULATION-DECALAGE    30

A

EP 0 262 032 B1

FIG. 4a

FIG. 4b

FIG. 5a

FIG. 5b

FIG. 6

14

FIG. 7a

FIG. 7b

FIG. 8a

FIG. 8b

## FIG 9

```
          ┌──────────────┐
          │  ...... + B  │      32
          └──────────────┘
   38           │              │
   D_i ──→ ┌──────────────┐   34
          │     MUX      │
          └──────────────┘
                │
   ┌──────────────────────────────┐   36
   │  REGISTRE ACCUMULATION-DECALAGE │
   └──────────────────────────────┘
          A  │
             ↓
```

## FIG. 10

```
                    38
              ┌──────────┐
         ┌────│    ▷     │────┐
   -A    │    └──────────┘   │ +A        "0"  "1"
   42  ┌──────────────────────────┐  40      ┌──────────┐
   D_{h-1} ──→│        MUX         │───────→│   MUX    │
        └──────────────────────────┘          └──────────┘
                    │                            44
              ┌──────────────┐        C_0
              │ ...... +(∓B) │←────────────
              └──────────────┘
   38             │        32
   D_i ──→ ┌──────────────┐
          │     MUX      │   34
          └──────────────┘
                │
   ┌──────────────────────────────┐   36
   │ REGISTRE ACCUMULATION-DECALAGE │
   └──────────────────────────────┘
          A │
            ↓
```

## FIG. 11

```
            -A    ┌──────────┐   38
           ┌──────│    ▷     │──────┐
           │      └──────────┘      │ +A      "0"  "1"
   42   ┌──────────────────────────┐  40      ┌──────────┐
   D_{h-1}──→│        MUX         │────────→│   MUX    │
         └──────────────────────────┘          └──────────┘
                    │                            44
              ┌──────────────┐
              │ ...... +(∓B) │←──────── 32
              └──────────────┘
   38             │
   D_i ──→ ┌──────────────┐
          │     MUX      │   34
          └──────────────┘
                │
   ┌──────────────────────────────┐   36            44
   │ REGISTRE ACCUMULATION-DECALAGE │─────────────    ▽
   └──────────────────────────────┘
          A │
            ↓
```

## FIG. 12

## FIG. 13